(19) **Europäisches Patentamt**

**European Patent Office**

**Office européen des brevets**

(11) Veröffentlichungsnummer: **0 042 911**
**B1**

(12) EUROPÄISCHE PATENTSCHRIFT

(45) Veröffentlichungstag der Patentschrift: **18.09.85**

(21) Anmeldenummer: **81102000.7**

(22) Anmeldetag: **18.03.81**

(51) Int. Cl.⁴: **B 60 K 5/12, F 16 F 9/10**

(54) Hydraulisch dämpfendes Einkammerlager.

(30) Priorität: **27.06.80 DE 3024092**

(43) Veröffentlichungstag der Anmeldung:
**06.01.82 Patentblatt 82/01**

(45) Bekanntmachung des Hinweises auf die
Patenterteilung:
**18.09.85 Patentblatt 85/38**

(84) Benannte Vertragsstaaten:
**BE FR GB IT NL SE**

(56) Entgegenhaltungen:
**EP-A-0 014 742**
**DE-A-2 932 478**
**DE-A-2 941 118**
**FR-A-1 178 262**
**FR-A-2 475 172**
**US-A-3 137 466**
**US-A-4 159 091**

(73) Patentinhaber: **Boge GmbH**
**Bogestrasse 50**
**D-5208 Eitorf/Sieg (DE)**

(72) Erfinder: **Brenner, Heinz, Ing. grad.**
**Am Thurmberg 11**
**D-5483 Bad Neuenahr-Ahrweiler (DE)**
Erfinder: **Büth, Peter**
**Himmelsburger Strasse 145**
**D-5483 Bad Neuenahr-Ahrweiler (DE)**
Erfinder: **Neuburger, Wilhelm**
**Schlossallee 19**
**D-5300 Bonn-Bad Godesberg (DE)**
Erfinder: **Quast, Jörn-Reiner, Ing. grad.**
**Am Kurgarten 64**
**D-5485 Sinzig-Bad Bodendorf (DE)**
Erfinder: **Rudolf, Hans Joachim, Dipl.-Ing.**
**Anton Günther Strasse 9**
**D-2902 Rastede (DE)**

Courier Press, Leamington Spa, England.

EP 0 042 911 B1

## Beschreibung

Die Erfindung bezieht sich auf ein hydraulisch dämpfendes Einkammerlager, insbesondere Motorlager, für Kraftfahrzeuge, bestehend aus einer von einer ersten, membranartigen, dichtend an einem metallischen Widerlager angeschlossenen und mit axialem, beidseitig definiertem Spiel oszillierenden Stirnwand, einer zweiten, metallischen Stirnwand und einer sich zwischen den beiden Stirnwänden erstreckenden, gummielastische Umfangswand begrenzten, mit Dämpfungsflüssigkeit gefüllten Kammer und einem getrennten, über eine in der metallischen Stirnwand befindliche Drosselstelle mit der Kammer verbundenen, zumindest einen Teil der Dämpfungsflüssigket der Kammer drucklos aufnehmenden, elastisch Verformbaren Ausgleichsraum.

Es sind Dämpfungsvorrichtungen bekannt (z.B. US—PS 4 159 091), bei denen eine Trennwand mit einem kalibrierten Loch einen Raum in zwei Kammern trennt, von denen die erste und wenigstens ein Teil der zweiten Kammer mit Flüssigkeit gefüllt sind. Bei einem derartigen Zweikammerlager ist die Trennwand so angeordnet, daß sie über dem Beschlagteil zur Mittelebene verschiebbar gehalten ist. Darüber hinaus wird die zweite Kammer durch eine elastische Stirnwand gebildet, wobei jedoch die Gefahr besteht, daß diese stirnseitige frei angeordnete elastische Stirnwand beschädigt wird und dadurch eine einwandfreie Funktion des Zweikammerlagers nicht mehr gewährleistet ist.

Der Erfindung liegt daher die Aufgabe zugrunde, den Ausgleichsraum eines Einkammerlagers so zu verbessern und anzuordnen, daß seine einwandfreie Funktion durch äußere Einflüsse nicht beeinträchtigt werden kann. Zusätzlich soll die Herstellung des Einkammerlagers vereinfacht werden.

Zur Lösung dieser Aufgabe wird bei einem Einkammerlager vorgeschlagen, daß die metallische Stirnwand topfartig ausgebildet und der durch einen ballonartigen Faltenbalg gebildete Ausgleichsraum innerhalb dieser Stirnwand angeordnet ist, daß die topfartig ausgebildete Stirnwand nach innen gewölbt ist und an ihrem äußeren Ende durch eine Deckplatte verschlossen ist.

Vorteilhaft ist bei dieser Ausbildung, daß die topfartig ausgebildete Stirnwand ohne zusätzlichen Aufwand diese Form erhält und den Ausgleichsraum vor Beschädigungen schützt. Durch die nach innen gewölbte Ausbildung wird eine leichte Montage des Ausgleichsraumes von innen ermöglicht, wobei eine zusätzliches Verschließen des freien Endes durch eine Deckplatte eine vollständige Kapselung des Ausgleichsraumes ergibt. Durch die günstige ballonartige Ausbildung des Faltenbalges wird erreicht, daß der Ausgleichsraum nur an einer ringförmigen Fläche mit der Stirnwand verbunden werden muß.

Vorzugsweise trägt die Deckplatte einen Befestigungsstift für das Lager. Dies ermöglicht nicht nur eine einfache Herstellung, sondern auch eine leichte Anbringung des Einkammerslagers.

Gemäß einer vorteilhaften Ausbildung der Erfindung ist die Drosselstelle durch einen zentrisch in die topfartig ausgebildete Stirnwand eingesetzten Nippel mit einer Drosselöffnung gebildet. Dadurch kann die Drosselstelle in einfacher Weise getrennt von der Stirnwand gefertigt werden und ist ohne großen Aufwand mittels einer Dichtung in die Stirnwand einsetzbar. Bei einem Nippel aus Kunststoff kann die Dichtung eingespart werden.

In Ausgestaltung der Erfindung ist es auch möglich, den den Ausgleichsraum bildenden Faltenbalg direkt mittels des die Drosselöffnung aufweisenden Nippels in der Stirnwand zu halten. Dies vereinfacht den Befestigungs- und Montageaufwand.

Der Gegenstand der Erfindung wird nachfolgend anhand eines in einer Zeichnung dargestellten Ausführungsbeispieles näher erläutert.

In dieser Zeichnung ist ein Einkammerlager 1 für den Motor eines Kraftfahrzeuges im Schnitt gezeigt, das aus einer topfartigen, metallischen Stirnwand 2 mit einer kegeligen Anschlußfläche 3 besteht. An der äußeren Seite dieser kegeligen Anschlußfläche 3 ist eine gummielastische, als Feder wirkende Umfangswand 4 anvulkanisiert, die über ihre andere Ringfläche durch Vulkanisation an ein ringförmiges Widerlager 5 angeschlossen ist. Eine dünne Schicht der Umfangswand 4 erstreckt sich bis in eine ringförmige Umbördelung 6 und erfüllt hier die Funktion einer Dichtung.

Die Umbördelung 6 nimmt einerseits den äußeren Ring 7 einer membranartigen Stirnwand 8 und andererseits eine Deckplatte 9 auf, die einen Befestigungsstift 10 trägt und eine Öffnung 11 zur Belüftung des zwischen Stirnwand 8 und Deckplatte 9 gebildeten Raumes 12 besitzt. Die membranartige Stirnwand 8 ist so ausgebildet, daß im Verbindungsbereich des elastischen Teiles der Stirnwand 8 mit dem eingespannten Ring 7 eine Oszillierbarkeit des mit einer Verstärkung versehenen mittleren Bereiches der Stirnwand 8 in axialer Richtung in vorbestimmter Größe gewährleistet ist.

Die topfartige Stirnwand 2 ist an ihrem äußeren Ende durch eine Deckplatte 13 geschlossen, die ebenfalls einen Befestigungsstift 14 trägt. In die durch die Stirnwand 2 und die Deckplatte 13 gebildete Kapsel 15 ist ein ballonartiger Faltenbalg 16 aus elastischem Werkstoff eingesetzt, der mit seinem offenen Ende in eine zentrische Öffnung 17 der Stirnwand 2 ragt. In das offene Ende des Faltenbalges 16 ist ein Nippel 18 aus Kunststoff eingestreckt, über den das offene Ende des Faltenbalges 16 dichtend in der Öffnung 17 der Stirnwand 2 gehalten ist. Der Nippel 18 besitzt eine Drosselöffnung 19, über die die von der Stirnwand 2, der Stirnwand 8 und der Umfangswand 4 begrenzte Kammer 20 mit einem von dem Faltenbalg 16 umschlossenen Ausgleichsraum 21 in Strömungsverbindung steht.

Sowohl die Kammer 20 als auch der Ausgleichsraum 21 sind drucklos mit Dämpfungsflüssigket gefüllt. Bei einer Verkleinerung der Kammer 20 durch von außen einwirkende Kräfte nimmt der Ausgleichsraum 21 die dadurch über die Drosselöffnung 19 ausströmende Dämpfungsflüssigkeit drucklos unter Verformung des Faltenbalges 16 auf. Damit dieser Verformung in der Kapsel 15 kein Widerstand entgegensteht, ist die Deckplatte 13 mit einer Öffnung 22 zur Ent- und Belüftung der Kapsel 15 ausgerüstet.

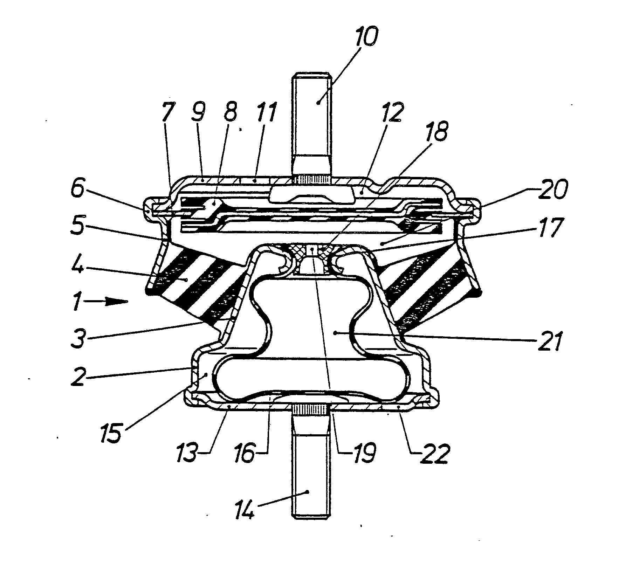

Das in der Zeichnung dargestellte Einkammerlager 1 ist sowohl in der dargestellten als auch in geneigter als auch in um 180° gedrehter Lage wirksam.

Anstelle des Befestigungsstiftes 10 kann am Widerlager 5 eine umlaufender Befestigungsflansch oder eine Befestigungsnase angeschlossen sein.

Bezugszeichenliste
1. Einkammerlager
2. Stirnwand
3. Anschlußfläche
4. Umfangswand
5. Widerlager
6. Umbördelung
7. Ring
8. Stirnwand
9. Deckplatte
10. Befestigungsstift
11. Öffnung
12. Raumes
13. Deckplatte
14. Befestigungsstift
15. Kapsel
16. Faltenbalg
17. Öffnung
18. Nippel
19. Drosselöffnung
20. Kammer
21. Ausgleichsraum
22. Öffnung

**Patentansprüche**

1. Hydraulisch dämpfendes Einkammerlager (1), insbesondere Motorlager für Kraftfahrzeuge, bestehend aus einer von einer ersten, membranartigen, dichtend an einem metallischen Widerlager (5) angeschlossenen und mit axialem, beidseitig definiertem Spiel oszillierenden Stirnwand (8), einer zweiten, metallischen Stirnwand (2) und einer sich zwischen den beiden Stirnwänden erstreckenden, gummielastische Umfangswand (4) begrenzten, mit Dämpfungsflüssigkeit gefüllten Kammer (20) und einem getrennten, über eine in der metallischen Stirnwand (2) befindliche Drosselstelle (19) mit der Kammer verbundenen, zumindest eine Teil der Dämpfungsflüssigket der Kammer drucklos aufnehmenden, elastisch verformbaren Ausgleichsraum (21), dadurch gekennzeichnet, daß die metallische Stirnwand (2) torpfartig ausgebildet und der durch einen ballonartigen Faltenbalg (16) gebildete Ausgleichsraum (21) innerhalb dieser Stirnwand (2) angeordnet ist, daß die topfartig ausgebildete Stirnwand (2) nach innen gewölbt ist und an ihrem äußeren Ende durch eine Deckplatte (13) verschlossen ist.

2. Einkammer nach Anspruch 1, dadurch gekennzeichnet, daß die Deckplatte (13) einen Befestigungsstift (14) für das Lager (1) trägt.

3. Einkammerlager nach Anspruch 1, dadurch gekennzeichnet, daß die Drosselstelle durch einen zentrisch in die topfartig ausgebildete Stirnwand (2) eingesetzten Nippel (18) mit einer Drosselöffnung (19) gebildet ist.

4. Einkammerlager nach Anspruch 3, dadurch gekennzeichnet, daß der Nippel (18) aus Kunststoff besteht.

5. Einkammerlager nach Anspruch 1 und 3, dadurch gekennzeichnet, daß der Faltenbalg (16) mittels des Nippels (18) in der Stirnwand (2) gehalten ist.

**Revendications**

1. Support à chambre unique à amortissement hydraulique (1), notamment support moteur pour véhicules automobiles, comprenant une chambre (20) remplie de liquide d'amortissement, délimitée par un premier fond (8), formant membrane, fixé à joint étanche à une butée métallique (5) et qui peut osciller avec un jeu axiale défini sur les deux faces, un deuxième fond métallique (2) et une paroi périphérique (4) possédant l'élasticité du caoutchouc et qui s'étend entre les deux fonds, et une enceinte d'équilibrage (21) séparée et élastiquement déformable, qui communique avec la chambre par un étranglement (19) situé dans le fond métallique (2) et qui reçoit sans pression au moins une partie du liquide d'amortissement de la chambre, caractérisé en ce que le fond métallique (2) est en forme de cloche, en ce que l'enceinte d'équilibrage (21) formée par un soufflet (7) en forme de ballon est disposée à l'intérieur de ce fond (2), et en ce que le fond (2) en forme de cloche est bombé vers l'intérieur et est fermé à son extrémité extérieure par une plaque de fermeture (13).

2. Support à chambre unique selon la revendication 1, caractérisé en ce que la plaque de fermeture (13) porte une tige de fixation (14) pour le montage du support.

3. Support à chambre unique selon la revendication 1, caractérisé en ce que l'étranglement est formé par un téton (18) muni d'un orifice d'étranglement (19) et fixé en position centrale dans le fond (2) en forme de cloche.

4. Support à chambre unique selon la revendication 3, caractérisé en ce que le téton (18) est en matière plastique.

5. Support à chambre unique selon les revendications 1 et 3, caractérisé en ce que le soufflet (16) est fixé dans le fond (2) au moyen du tèton (18).

**Claims**

1. Mounting, in particular an engine mounting for motor vehicles, with a single hydraulic damping chamber comprising a chamber (20) filled with damping fluid and defined by a first diaphragm-like face wall (8) sealingly connected to a metallic abutment (5) and having axial play defined in both directions, a second metallic face wall (2) and a resilient circumferentially extending wall (4) extending between the two face walls, and a separate elastically deformable compensating chamber (21) connected to the chamber through a throttle point (19) present in the metallic face wall (2) and receiving at least part of the damping fluid from the chamber at zero pressure, characterised in that, the metallic face wall (2) is made of pot-like shape and the compensating chamber (21) formed by a balloon-shaped bellows (16) is arranged within this face wall, and that the pot-shaped face wall (2) is inwardly bulged and is closed at its outer end by a cover plate (13).

2. Single-chamber mounting according to claim 1, characterised in that, the cover plate (13) carries an attachment pin (14) for the mounting (1).

3. Single-chamber mounting according to claim 1, characterised in that, the throttle point is formed by a nipple (18) having a throttle opening (19), inserted centrally in the pot-shaped face wall (2).

4. Single-chamber mounting according to claim 3, characterised in that, the nipple (18) is made of synthetic resin.

5. Single-chamber mounting according to claim 1 and 3, characterised in that, the bellows (16) is held in the face wall (2) by means of the nipple (18).